# EUROPÄISCHE PATENTANMELDUNG

(11) **EP 2 224 039 A1**
(43) Veröffentlichungstag der Anmeldung: **01.09.2010**
(21) Anmeldenummer: 09001190.9
(22) Anmeldetag: 28.01.2009
(51) Int. Cl.: C23C 28/00, C23C 18/12, C23C 20/06, F01D 5/28, C23C 4/08, C23C 4/12, F01D 25/00

(54) **Beschichtung mit thermischen und nicht-thermischen Beschichtungsverfahren**

(71) Anmelder: Siemens Aktiengesellschaft, 80333 München (DE)
(72) Erfinder: Die Erfindernennung liegt noch nicht vor

(57) **Zusammenfassung**

Bauteile werden oft mittels einem thermischen Spritzverfahren beschichtet, um das darunterliegende Substrat vor Korrosion, Oxidation oder Wärme zu schützen. Dabei kann es durch Auftreten von Unregelmäßigkeiten beim Beschichtungsprozess zu Unregelmäßigkeiten in der Beschichtung kommen.
Diese Unregelmäßigkeiten können besitigt werden durch ein Beschichtungsverfahren, bei dem nach dem ersten thermischen Beschitungsverfahren ein zweites, nicht-thermischen, Beschichtungsverfahren verwendet wird, um auf diese Stellen Beschichtungsmaterial aufzutragen.

## Beschreibung

Die Erfindung betrifft die Beschichtung eines Bauteils, bei dem nacheinander ein erstes und ein zweites Beschichtungsverfahren verwendet wird.

Bauteile werden oft beschichtet, um das darunterliegende Substrat vor Korrosion, Oxidation oder Wärme zu schützen.

Dabei kann es durch Auftreten von Unregelmäßigkeiten beim Beschichtungsprozess oder in schwer zugänglichen Bereichen zu Unregelmäßigkeiten in der Beschichtung sowie beim Handling der Bauteile kommen.

Bisher mussten Beschichtungsroboter für die Korrektur der Unregelmäßigkeit sehr aufwändig programmiert werden.

Es ist daher Aufgabe der Erfindung ein Verfahren aufzuzeigen, das oben genanntes Problem löst, indem es vereinfacht und flexibel die Unregelmäßigkeiten korrigiert.

Die Aufgabe wird gelöst durch ein Beschichtungsverfahren, bei dem nach dem ersten, insbesondere thermischen, Beschichtungsverfahren ein zweites, von dem ersten verschiedenen, insbesondere ein nicht-thermisches, Beschichtungsverfahren verwendet wird, um auf einer schwer zugänglichen oder einfach zu reparierenden Stelle Beschichtungsmaterial aufzutragen.

### Es zeigen

- Figur 1: den Ablauf des Verfahrens,
- Figur 2: eine Gasturbine,
- Figur 3: eine Turbinenschaufel,
- Figur 4: eine Brennkammer.

Die Figuren und die Beschreibung stellen nur ein Ausführungsbeispiel der Erfindung dar.

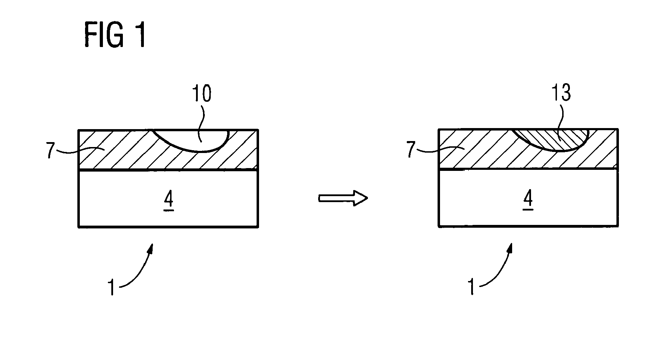

In Figur 1 links ist ein Bauteil 1, 120, 130, 155 dargestellt.

Das Bauteil 1 weist ein Substrat 4 auf, das insbesondere bei Turbinenschaufeln 120, 130 aus einer nickel- oder kobaltbasierten Superlegierung besteht.

Auf das Substrat 4 werden ein oder mehrere Beschichtungen 7 aufgebracht. Dies können metallische Schutzbeschichtungen 7 (MCrAlX) und/oder keramische Schichten 7 sein.

Die Beschichtung 7, die insbesondere die äußerste Schicht des Schichtsystems darstellt, weist an einer Stelle eine Unregelmäßigkeit 10 oder eine schwer zugängliche Stelle 10 auf. Dies kann vorzugsweise eine nicht erreichte erforderliche Schichtdicke oder vorzugsweise Stellen an deren keine Beschichtung vorhanden ist.

Die Schicht 7 ist im ersten Schritt durch ein erstes Beschichtungsverfahren, insbesondere ein thermisches Spritzverfahren wie vorzugsweise Plasmaspritzen, HVOF oder Kaltgasspritzen aufgebracht worden.
Das erste Beschichtungsverfahren stellt vorzugsweise ein automatisiertes oder halbautomatisiertes Beschichtungsverfahren in einer Anlage dar, bei dem das Substrat 4 in einer Beschichtungsapperation eingebaut wird und dann nach einem ausgewählten Programm beschichtet wird.

In einem zweiten Verfahrensschritt wird mittels eines zweiten Beschichtungsverfahren an die Stelle 10 zusätzlich Material 13 aufgebracht, das die Unregelmäßigkeit 10 beseitigt.

Das Material 13 wird durch ein zweites von dem ersten verschiedenen, insbesondere nicht-thermischen Beschichtungsverfahren aufgebracht. Das zweite Verfahren ist kein Plasmaspritzen, kein CVD, kein PVD, kein HVOF und kein Kaltgasspritzen.

Insbesondere stellt das zweite Beschichtungsverfahren ein Schlickerauftrag oder Schlickeraufspritzen dar.
Der Schlicker weist für das Pulver (Beschichtungsmaterial) vorzugsweise die gleiche chemische Zusammensetzung auf wie das Material, das auch beim ersten Beschichten verwendet wurde. Insbesondere wird auch die gleiche Korngrößenverteilung verwendet wie beim ersten Beschichten. Ganz vorzugsweise wird eine etwas kleinere Korngrößenverteilung verwendet (d.h. die mittlere Korngröße ist messbar kleiner).

Der Begriff "nicht-thermisch" bezieht sich auf die Temperatur beim Auftragen von Material auf ein Substrat, d.h. ob das Material während des Aufbringens erwärmt wird (≥ 100°C, insbesondere > 300°C) und nicht auf nachfolgende Schritte nach dem Auftrag wie z.B. ein Entbinderungsschritt oder ein Sintern.

Das zweite Beschichtungsverfahren ist vorzugsweise ein manuelles Beschichtungsverfahren (Pinseln, Gießen, Aufstreichen, Aufspritzen, ...).
Ein Schlicker ist ein Gemisch aus einem Pulver und zumindest einer Flüssigkeit (Lösungsmittel) und ggf. eines Binders.

Der optional vorhandene Binder wird vorzugsweise ausgetrieben und das Material 13 kann im Einsatz oder einfach in einem Ofen entbindert und/oder verdichtet werden und gleicht die Ungleichmäßigkeit 10 aus oder beseitigt sie vollständig.

Die Beseitigung der Unregelmäßigkeit 10 erfolgt durch das Verfahren sehr schnell und einfach gegenüber dem aufwändigen lokalen Beschichten in einer Beschichtungsapparatur. Sie kann daher auch angewandt werden, wenn Fehler nach Auslieferung auffällig werden, insbesondere auch vor Ort beim Kunden.

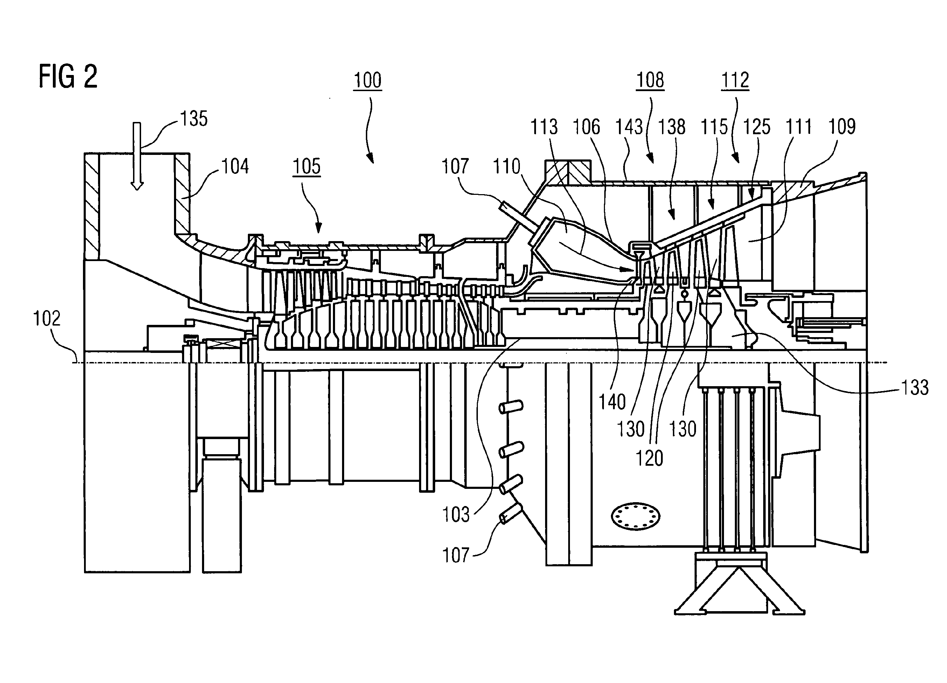

Die Figur 2 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

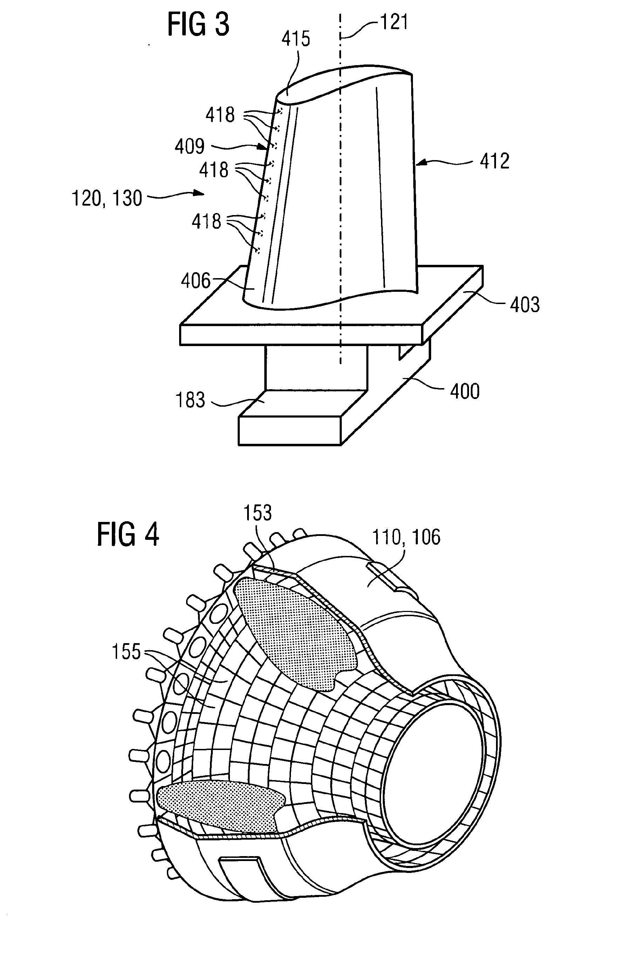

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 4 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid etc..
Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente und andere Heißgaskomponenten 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zum Beschichten eines Substrats (4) eines Bauteils (1, 120, 130, 155),
bei dem im ersten Schritt
ein erstes Beschichtungsverfahren angewendet wird, insbesondere ein Spritzverfahren,
ganz insbesondere ein thermisches Spritzverfahren, um eine Schicht (7) zu erzeugen,
die (7) jedoch mindestens eine Unregelmäßigkeit (10) aufweist,
**dadurch gekennzeichnet, dass**
die zumindest eine Unregelmäßigkeit (10) durch ein zweites von dem ersten Beschichtungsverfahren verschiedenen Beschichtungsverfahren beseitigt wird.

2. Verfahren nach Anspruch 1,
bei dem das erste Beschichtungsverfahren ein thermisches Spritzverfahren darstellt.

3. Verfahren nach Anspruch 1,
bei dem das zweite Beschichtungsverfahren ein nicht-thermisches Beschichtungsverfahren darstellt.

4. Verfahren nach Anspruch 3,
bei dem das zweite Beschichtungsverfahren oder das nichtthermische Spritzverfahren ein Schlickerauftrag oder Schlickeraufspritzen darstellt.

5. Verfahren nach Anspruch 1, 2, 3 oder 4,
bei dem die Schicht (7) eine keramische Schicht darstellt.

6. Verfahren nach Anspruch 1 oder 2,
bei dem das erste Beschichtungsverfahren ein automatisches oder halbautomatisches Beschichtungsverfahren darstellt.

7. Verfahren nach Anspruch 1, 3, 4 oder 6,
bei dem das zweite Beschichtungsverfahren ein manuelles Verfahren darstellt.

8. Verfahren nach Anspruch 1, 2 oder 6,
bei dem das erste Beschichtungsverfahren oder das thermische Spritzverfahren ausgewählt wird aus Plasmaspritzen, HVOF oder Kaltgasspritzen.

9. Verfahren nach Anspruch 4 oder 7,
bei dem ein Binder im Schlicker verwendet wird.

10. Verfahren nach Anspruch 4 oder 7,
bei dem kein Binder im Schlicker verwendet wird.

11. Verfahren nach Anspruch 1, 2, 3, 4 oder 5,
bei dem beim ersten und zweiten Verfahren das gleiche Beschichtungsmaterial verwendet wird.
